# EUROPÄISCHE PATENTANMELDUNG

(11) **EP 4 378 862 A1**
(43) Veröffentlichungstag der Anmeldung: **05.06.2024**
(21) Anmeldenummer: 23211061.9
(22) Anmeldetag: 21.11.2023
(51) Int. Cl.: B65G 47/31, B29C 49/42, B65G 43/08, B65G 35/00

(54) **VEREINZELUNGSVORRICHTUNG SOWIE VERFAHREN ZUM VEREINZELN VON VORFORMLINGEN**

(30) Priorität: 01.12.2022 DE 102022131860
(71) Anmelder: KHS GmbH, 44143 Dortmund (DE)
(72) Erfinder: Heller, Alexander, 22941 Bargteheide (DE)

(57) **Zusammenfassung**

Die Erfindung betrifft eine Vereinzelungsvorrichtung zum Vereinzeln von Vorformlingen (1) mit einer entlang einer Förderrichtung (F) angeordneten Fördergasse (6), wobei zumindest ein erster Förderabschnitt (7) der Fördergasse (6) durch ein erstes Förderrollenpaar (10) mit gegenläufig rotierbar eingerichtete Förderrollen (10a, 10b) gebildet ist, deren im Wesentlichen parallel zur Förderrichtung (F) verlaufenen Drehachsen (D) zueinander beabstandet sind. Erfindungsgemäß ist die Fördergasse (6) in einem in Förderrichtung (F) hinter dem ersten Förderabschnitt (7) angeordneten zweiten Förderabschnitt (8) durch ein zweites Förderrollenpaar (12) gebildet, wobei dem ersten und dem zweiten Förderrollenpaar (10, 12) jeweils eine Antriebseinrichtung (13, 14) zugeordnet ist.

## Beschreibung

Die vorliegende Erfindung betrifft eine Vereinzelungsvorrichtung zum Vereinzeln von Vorformlingen mit einer entlang einer Förderrichtung angeordneten Fördergasse, wobei zunächst ein erster Förderabschnitt der Fördergasse durch ein erstes Förderrollenpaar mit gegenläufig rotierbar eingerichteten Förderrollen gebildet ist, deren im Wesentlichen parallel zur Förderrichtung verlaufenden Drehachsen zueinander beabstandet sind. In diesem Zusammenhang ist mit einer im Wesentlichen parallel zur Förderrichtung verlaufenden Drehachse gemeint, dass die Drehachsen der Förderrollen lediglich um bis zu 5° von der Förderrichtung abweichen können.

Derartige Vereinzelungsvorrichtungen sind grundsätzlich aus dem Stand der Technik bekannt und werden üblicherweise auch als Rollensortierer bezeichnet, da durch die Drehbewegung der Förderrollen einerseits eine Vereinzelung und andererseits eine Sortierung der Vorformlinge im Zuge der Bewegung entlang des Förderabschnittes erfolgen kann.

Die Erfindung bezieht sich hierbei auf Vereinzelungsvorrichtungen aus dem Bereich der Getränkeindustrie, wobei es sich bei den Vorformlingen um sogenannte Preforms handelt, welche in Blasmaschinen zu Getränkebehältern ausgebildet werden. Entsprechend bestehen die Vorformlinge aus einem thermoplastischen Material, insbesondere aus Polyethylenterephthalat (PET), sodass diese in geeigneter Art und Weise erwärmt, aufgeweicht und sodann durch Beaufschlagung mit einem Innendruck zu einem Behälter expandiert werden können.

Um einen unterbrechungsfreien Herstellungsprozess in der Blasmaschine zu gewährleisten, muss diese kontinuierlich mit Vorformlingen beschickt werden.

Diese liegen üblicherweise vorgefertigt vor und müssen ausgehend von einem Sammelbehälter vereinzelt und ausgerichtet der Blasmaschine zugeführt werden.

Die Vereinzelungsvorrichtung ist üblicherweise Teil einer Zuführanlage, welche neben der Vereinzelungsvorrichtung beispielsweise auch über einen sogenannten SteigFörder verfügt, über den die Preforms aus dem Sammelbehälter entnommen und entlang einer vertikalen Richtung nach oben transportiert werden. Die Vorformlinge fallen dann von oben über einen Behältereinwurf in die Fördergasse der Vereinzelungsvorrichtung, wobei die Fördergasse hinsichtlich ihrer Breite insbesondere durch den Abstand der beiden Förderrollen des entsprechenden Förderrollenpaars zueinander definiert wird.

Hierbei ist zu beachten, dass die Vorformlinge in einem vereinzelten und sortierten Zustand mit ihrem sogenannten Neckring zwischen den Förderrollen hängen bleiben und durch die gegenläufige Rotation der Förderrollen kontinuierlich nach oben geworfen werden. Entsprechend weisen die Förderrollen an der Fördergasse eine nach oben zeigende Drehrichtung auf, sodass entsprechend auch die dem Förderrollenpaar zugeordnete Antriebseinrichtung dazu eingerichtet ist, eine Drehbewegung zu bewirken, welche im Bereich der Fördergasse nach oben gerichtet ist. Durch diese Wurfbewegung richten sich die Vorformlinge derart aus, dass deren Öffnung nach oben zeigt, während der später in der Blasmaschine auszuformende Bereich der Vorformlinge zwischen den Förderrollen in der Fördergasse angeordnet ist. Durch eine Schrägstellung der Förderrollen bezüglich einer vertikalen Achse kann darüber hinaus der Transport in Förderrichtung bewirkt werden.

Entsprechende Ausgestaltungen sind beispielsweise aus der EP 2 892 661 oder aus der WO 2011/069268 A1 bekannt. Hierbei erstrecken sich die Förderrollen des Förderrollenpaares über die gesamte Länge der Fördergasse, sodass entsprechend die Fördergasse aus nur einem Förderabschnitt gebildet ist. Hierdurch werden auch die Vorformlinge entlang der Förderrichtung stets mit derselben Drehgeschwindigkeit der Förderrollen beaufschlagt, sodass entsprechend an einem Behältereinwurf die gleiche Drehgeschwindigkeit der Förderrollen vorliegt wie auch in einem Auslaufbereich der Fördergasse. Dieses Prinzip hat sich grundsätzlich bewährt, da eine entsprechende einfache Betriebsweise und Regelung der Vereinzelungsvorrichtung möglich ist. Zugleich kann es aber während des Betriebs der Vereinzelungsvorrichtung zu Situationen kommen, in denen die konstante Drehgeschwindigkeit den Betrieb der Vereinzelungsvorrichtung und damit auch der gesamten Blasanlage beeinträchtigt.

Beispielsweise ist zunehmend ein besonders hoher Behälterdurchsatz bzw. Vorformlingdurchsatz in der Blasanlage erwünscht, wobei insbesondere mehr als 90.000 Vorformlinge pro Stunde in der Blasanlage zu Getränkeflaschen ausgeformt werden sollen. Dieser hohe Behälterdurchsatz hat zur Folge, dass hohe Drehgeschwindigkeiten in den Rollensortierern vorgesehen werden müssen, um eine ausreichende Vereinzelung und Förderung der Vorformlinge zu bewirken. Gerade bei diesen hohen Geschwindigkeiten können sich die Vorformlinge aber im Bereich des Behälterauswurfes aufstauen, wodurch einzelne Vorformlinge nach oben gedrückt werden und sich schrägstellen. Dies kann dann im schlimmsten Fall zu einem Verklemmen der Vorformlinge führen, wodurch die Vereinzelungsvorrichtung und gegebenenfalls die gesamte Blasanlage für einen gewissen Zeitabschnitt außer Betrieb genommen werden müssen. Durch eine Reduktion der Drehgeschwindigkeit kann zwar der Staudruck reduziert und das System beruhigt werden. Allerdings wird dann der gesamte Behälterdurchsatz reduziert, da die Vorformlinge im Bereich des Behältereinwurfs nicht in ausreichender Art und Weise abtransportiert werden können.

Zugleich kann aufgrund der schaufelweisen Förderung der SteigFörder im Bereich des Behältereinwurfs eine große Anzahl von Vorformlingen vorliegen, welche durch eine erhöhte Drehgeschwindigkeit abtransportiert werden müssen. Dies kann dann aber im schlimmsten Fall zu dem zuvor erwähnten Aufstauen führen, sodass eine Erhöhung der Drehgeschwindigkeit nicht zielführend ist.

Vor diesem Hintergrund liegt der Erfindung die Aufgabe zugrunde, eine Vereinzelungsvorrichtung anzugeben, welche besonders flexibel eingesetzt werden kann und insbesondere auch bei hohen Behälterdurchsätzen einen weitestgehend störungsfreien Betrieb ermöglicht.

Gegenstand und Lösung dieser Aufgabe ist eine Vereinzelungsvorrichtung gemäß Patentanspruch 1. Demnach ist die Fördergasse in einem in Förderrichtung hinter dem ersten Förderabschnitt angeordneten zweiten Förderabschnitt durch ein zweites Förderrollenpaar gebildet, wobei dem ersten und dem zweiten Förderrollenpaar jeweils eine Antriebseinrichtung zugeordnet ist. Es versteht sich, dass auch das zweite Förderrollenpaar analog zu dem ersten Förderrollenpaar ausgebildet ist und entsprechend gegenläufig rotierbar eingerichtete Förderrollen aufweist, deren im Wesentlichen parallel zur Förderrichtung verlaufenden Drehachsen zueinander beabstandet sind. Zwischen diesen beiden Förderrollen ist der zweite Förderabschnitt der Fördergasse gebildet. Darüber hinaus ist es selbstverständlich auch möglich, zusätzlich zu einem zweiten Förderabschnitt einen dritten, vierten oder darüber hinausgehenden Förderabschnitt vorzusehen, wobei sämtliche Förderabschnitte analog durch ein entsprechendes Förderrollenpaar gebildet sind.

Die Besonderheit gegenüber den bislang bekannten Vereinzelungsvorrichtungen ist vor allem darin begründet, dass nicht nur separate Förderrollen in unterschiedlichen Förderabschnitten vorliegen, welche unabhängig voneinander drehbar sind. Vielmehr werden die Förderrollen in den einzelnen Förderabschnitten auch durch separate Antriebseinrichtungen betrieben. Hierdurch ist es möglich die Förderrollen in dem ersten Förderabschnitt mit einer Drehgeschwindigkeit zu betreiben, welche sich von der Drehgeschwindigkeit der Förderrollen in dem zweiten Förderabschnitt unterscheidet. In diesem Zusammenhang ist anzumerken, dass die Förderrollen eines Förderabschnittes zwar gegenläufig rotieren aber bevorzugt die gleiche Drehgeschwindigkeit aufweisen. Sofern eine unterschiedliche Drehgeschwindigkeit zwischen den Förderrollen eines Förderabschnittes vorgesehen ist, so wird sich stets auf eine mittlere Drehgeschwindigkeit der Förderrollen in dem entsprechenden Förderabschnitt bezogen.

Gemäß einer Weiterbildung der Erfindung sind die Förderrollen des ersten Förderrollenpaars koaxial zu den Förderrollen des zweiten Förderrollenpaars angeordnet. Entsprechend sind die in Förderrichtung links angeordneten Förderrollen des ersten und des zweiten Förderabschnittes und die rechts angeordneten Förderrollen des ersten und des zweiten Förderabschnittes jeweils koaxial zueinander angeordnet, sodass entsprechend bei einem identischen Förderrollendurchmesser kein Sprung in der Breite der Fördergasse vorliegt. Dies ist insbesondere deshalb notwendig, da sich die Breite der Fördergasse vor allem nach der Breite des Neckringes bestimmt, sodass eine sich entlang der Förderrichtung unterscheidende Breite der Fördergasse für die Förderung und Vereinzelung der Vorformlinge nachteilig wäre.

Darüber hinaus grenzt der erste Förderabschnitt bevorzugt an einen Behältereinwurf an, sodass gerade in diesem ersten Förderabschnitt in einem erhöhten Maße ein Einsortieren der Vorformlinge in die Fördergasse bewirkt werden muss. Dies ergibt sich insbesondere daraus, dass - wie bereits zuvor erläutert - die Vorformlinge schaufelweise über den Behältereinwurf der Vereinzelungsvorrichtung zugeführt werden und sodann im Bereich des ersten Förderabschnittes einsortiert werden müssen.

Ausgehend von einer solchen Ausgestaltung ist dann vorgesehen, dass sich der erste Förderabschnitt über einen bereichsweise großen Bereich entlang der Fördergasse erstreckt. Insbesondere ist vorgesehen, dass sich der erste Förderabschnitt über einen Bereich zwischen 40 und 70 % der Gesamtlänge der Fördergasse erstreckt.

Darüber hinaus kann oberhalb der Fördergasse auch ein Einwurftrichter angeordnet sein, welcher sich zumindest teilweise entlang des ersten Förderabschnittes erstreckt. Mit einem Einwurftrichter ist in diesem Zusammenhang eine Einrichtung gemeint, welche entlang einer vertikalen Richtung in Richtung des Förderrollenpaares einen verjüngenden Querschnitt aufweist, sodass die oberhalb in den Einwurftrichter eingeführten Vorformlinge in Richtung der Behältergasse geführt werden. Dieser Einwurftrichter erstreckt sich bevorzugt über einen Bereich zwischen 50 und 90 % der Gesamtlänge des ersten Förderabschnittes.

Darüber hinaus sieht eine bevorzugte Weiterbildung der Erfindung vor, dass die Antriebseinrichtung des ersten Förderrollenpaares in Förderrichtung vor der Fördergasse angeordnet ist. Insbesondere ist vorgesehen, dass die Antriebseinrichtung aus zwei Antriebseinheiten gebildet ist, wobei jeweils eine Antriebseinheit einer Förderrolle zugeordnet ist und wobei die Antriebseinheiten eine koaxial zur Drehrichtung der zugeordneten Förderrollen angeordnete Antriebswelle aufweisen. Entsprechend ist es nicht notwendig Getriebevorrichtungen vorzusehen, welche einen parallelen Versatz zwischen den Drehachsen überbrücken. Als Antriebseinheiten sind insbesondere Elektromotoren vorgesehen.

Auch die Antriebseinrichtung des zweiten Förderrollenpaares besteht bevorzugt aus zwei Antriebseinheiten, insbesondere Elektromotoren, wobei jeweils eine Antriebseinheit einer Förderrolle zugeordnet ist. Im Unterschied zum ersten Förderrollenpaar sind die Antriebseinheiten des zweiten Förderrollenpaars bzw. ist die Antriebseinrichtung des zweiten Förderrollenpass in Förderrichtung neben der Fördergasse angeordnet. Dies gewährleistet, dass die Förderrollenpaare möglichst nah aneinander liegend innerhalb der Fördergasse angeordnet sein können. Allerdings ist dann auch eine Getriebevorrichtung vorzusehen, über die die Antriebswelle der Antriebseinheiten mit den zugeordneten Förderrollen verbunden werden kann.

Gemäß einer Weiterbildung der Erfindung ist zwischen den Förderabschnitten ein Lagerabschnitt vorgesehen. Dieser Lagerabschnitt dient der rotierbaren Lagerung der Förderrollen. Ein entsprechender Lagerabschnitt kann auch im Bereich des Behältereinwurfes bzw. im Auslaufbereich vorgesehen sein.

Durch die Anordnung eines Lagerabschnittes im Bereich der Fördergasse wird ein Bereich geschaffen, in welchen die Vorformlinge nicht aktiv durch Drehung der Förderrollen angetrieben werden können. Um dennoch einen Antrieb innerhalb dieses Lagerabschnittes zu gewährleisten, kann unterhalb des Lagerabschnittes zumindest eine Fluiddüse vorgesehen sein. Diese Fluiddüse ist zum Antrieb der Vorformlinge eingerichtet, sodass die von der Fluiddüse erzeugte Fluidströmung bevorzugt eine Geschwindigkeitskomponente in vertikaler Richtung als auch in Förderrichtung aufweist.

Die Vereinzelungsvorrichtung weist darüber hinaus bevorzugt eine Steuereinheit auf, welche dazu eingerichtet ist, die Antriebseinrichtungen des ersten und zweiten Förderrollenpaars unabhängig voneinander zu steuern oder zu regeln.

Sofern eine Regelung vorgesehen ist, ist insbesondere in einem Auslaufbereich der Fördergasse ein Belegungssensor angeordnet. Dieser Belegungssensor kann eine Belegungsdichte von Vorformlingen in dem Auslaufbereich ermitteln und die Informationen an die Steuereinheit übermitteln. Auf Basis dieser Informationen ist es dann möglich, die Drehgeschwindigkeit der Förderrollen in dem Auslaufbereich zu reduzieren. Gemäß einer bevorzugten Weiterbildung ist der Auslaufbereich in dem zweiten Förderabschnitt gebildet. Selbstverständlich ist es auch denkbar, an weiteren Positionen entlang der Fördergasse einen entsprechenden Belegungssensor anzuordnen. Denkbar ist beispielsweise eine Anordnung im Bereich des Behältereinwurfes oder auch im Bereich der Lagerabschnitte.

Gegenstand der Erfindung ist ferner ein Verfahren zum Vereinzeln von Vorformlingen gemäß Patentanspruch 12 in einer erfindungsgemäßen Vereinzelungsvorrichtung, wobei die Vorformlinge in der Fördergasse entlang der Förderrichtung durch gegenläufige Rotationen der Förderrollen transportiert werden und wobei in zumindest einem Betriebspunkt die Förderrollen des ersten Förderrollenpaares und die Förderrollen des zweiten Förderrollenpaares unterschiedliche Drehgeschwindigkeiten aufweisen.

In diesem Zusammenhang ist anzumerken, dass grundsätzlich unabhängig von einem bestimmten Betriebspunkt stets unterschiedliche Drehgeschwindigkeiten in den einzelnen Förderabschnitten vorgesehen sind. Alternativ ist es aber auch denkbar, dass ausgehend von einer identischen Drehgeschwindigkeit in den Förderabschnitten in bestimmten Betriebspunkten eine vorübergehende Reduzierung bzw. Erhöhung der Drehgeschwindigkeit in einem der Förderabschnitte erfolgt, sodass dann die Drehgeschwindigkeiten lediglich zeitweise voneinander abweichen.

Gemäß einer Weiterbildung des Verfahrens unterscheidet sich die Drehgeschwindigkeit des zweiten Förderrollenpaares von der Drehgeschwindigkeit des ersten Förderrollenpaares zwischen 5 und 25 %. Hierbei kann die Drehgeschwindigkeit des zweiten Förderrollenpaares entweder größer oder kleiner ausgebildet sein als die Drehgeschwindigkeit des ersten Förderrollenpaares.

Gemäß einer bevorzugten Ausgestaltung wird zunächst ein Belegungskennwert in dem Auslaufbereich der Fördergasse erfasst und bei Überschreiten eines Soll-Wertes die Drehgeschwindigkeit der Förderrollen in dem an den Auslaufbereich angrenzenden Förderabschnitt, insbesondere den zweiten Förderabschnitt, zumindest vorübergehend reduziert. Eine solche Betriebsweise ist insbesondere dann sinnvoll, wenn der Belegungssensor ein Aufstauen der Vorformlinge im Behälterauslauf erfasst. Zur Beruhigung des Transports kann dann entsprechend die Vordergeschwindigkeit reduziert werden.

In einer alternativen oder ergänzenden Verfahrensweise kann auch beispielsweise in einem ersten Förderabschnitt im Bereich des Behälterentwurfes ein Belegungskennwert erfasst und bei einem Überschreiten eines Soll-Wertes die Drehgeschwindigkeit der Förderrollen in dem ersten Förderrollenabschnitt erhöht werden. Auch hier kann lediglich eine zeitweise Erhöhung der Drehgeschwindigkeit vorgesehen sein.

Eine Weiterbildung des Verfahrens sieht ferner vor, dass die Vorformlinge in einem zwischen den Förderabschnitten angeordneten Lagerabschnitt mit einem Fluidstrom beaufschlagt werden. Hierbei ist die Beaufschlagung derart, dass die Vorformlinge in dem Bereich des Lageabschnittes in Förderrichtung beschleunigt werden können. Entsprechend weist der Fluidstrom, insbesondere ein Luftstrom, eine Geschwindigkeitskomponente in Förderrichtung auf. Darüber hinaus kann auch eine Geschwindigkeitskomponente in Vertikalrichtung vorgesehen sein.

Im Folgenden wird die Erfindung anhand eines Ausführungsbeispiels näher erläutert. Es zeigen:
- Fig. 1: eine Zuführeinrichtung mit einer erfindungsgemäßen Vereinzelungsvorrichtung sowie angrenzend Anlagenkomponenten
- Fig. 2: eine schematische Darstellung der erfindungsgemäßen Vereinzelungsvorrichtung in einer Draufsicht
- Fig. 3: die Vereinzelungsvorrichtung gemäß Fig. 2 in einer seitlichen Schnittdarstellung.

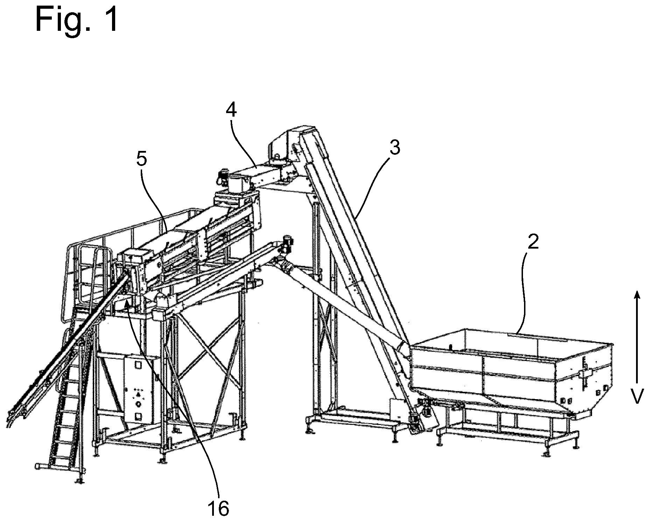

Die Fig. 1 zeigt eine Zuführvorrichtung zum Transport und zur Vereinzelung von Vorformlingen 1, welche beispielsweise in einem vereinzelten Zustand einer Blasmaschine für die Herstellung von Getränkeflaschen zugeführt werden. Die Vorformlinge 1 sind üblicherweise aus einem thermoplastischen Material, insbesondere aus Polyethylenterephthalat (PET), gebildet und liegen zunächst in einem Sammelbehälter 2 vor. Ausgehend von diesem Sammelbehälter 2 werden die Vorformlinge 1 über einen SteigFörder 3 zu einer Transportvorrichtung 4 transportiert, welche endseitig oberhalb einer als Rollensortierer 5 ausgebildeten Vereinzelungsvorrichtung angeordnet ist und die Vorformlinge 1 von oben herab in den Rollensortierer 5 einwirft. In dem Rollensortierer 5 erfolgt dann das Vereinzeln und Einsortieren der Vorformlinge 1. Darüber hinaus werden die Vorformlinge 1 entlang einer Förderrichtung F transportiert und anschließend einer Zuführrutsche 16 zugeführt. Innerhalb dieser Zuführrutsche 16 rutschen die einsortierten Vorformlinge 1 in eine nachgeschaltete Anlagenkomponente z. B. in einen Transportstern.

Anhand der Fig. 1 ist ferner ersichtlich, dass die als Rollensortierer 5 ausgebildete Vereinzelungsvorrichtung bezüglich einer Vertikalrichtung V schräg gestellt ist und demnach die Vorformlinge 1 entlang einer schräggestellten Förderrichtung F transportiert werden.

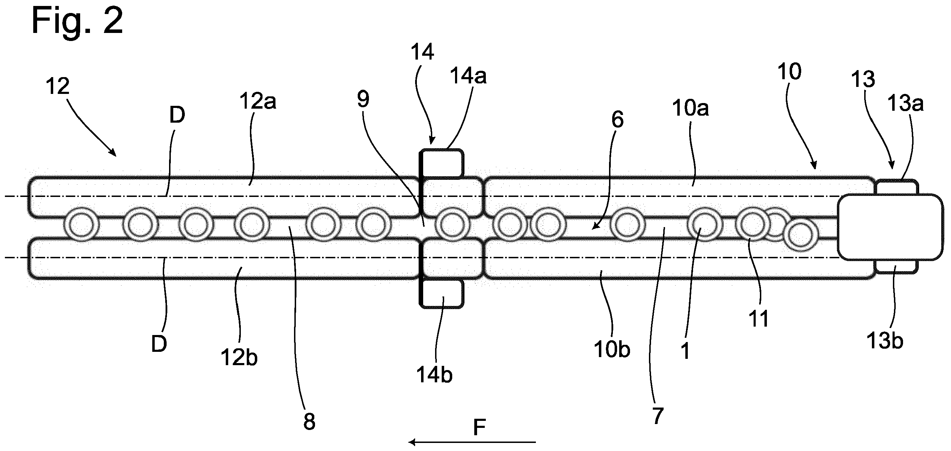

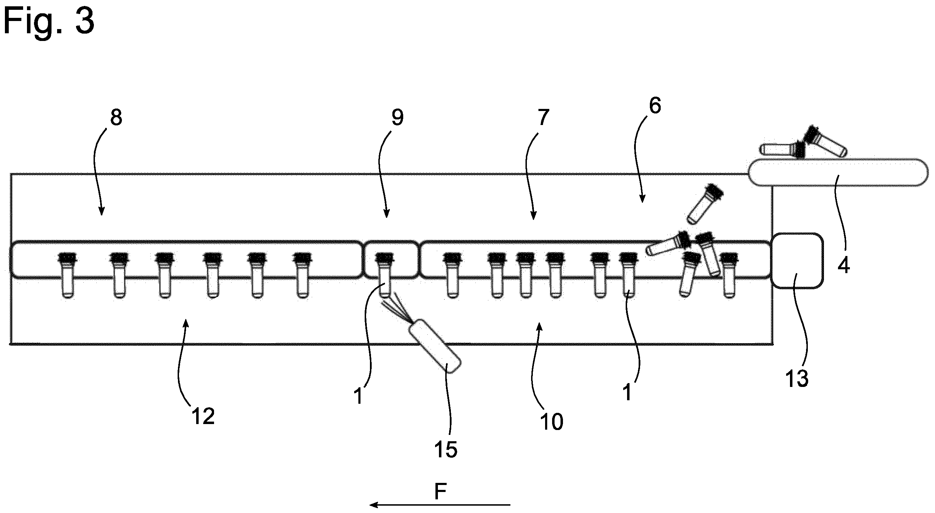

Die Fig. 2 und 3 zeigen die als Rollensortierer 5 ausgebildete erfindungsgemäße Vereinzelungsvorrichtung in unterschiedlichen Ansichten.

Gemäß der Fig. 2 ist eine Fördergasse 6 entlang der Förderrichtung F angeordnet, wobei diese Fördergasse 6 aus einem ersten Förderabschnitt 7 sowie aus einem zweiten Förderabschnitt 8 gebildet ist. Zwischen dem ersten und dem zweiten Förderabschnitt 7, 8 ist darüber hinaus ein Lagerabschnitt 9 angeordnet, auf welchen zu einem späteren Zeitpunkt eingegangen wird.

Der erste Förderabschnitt 7 wird über ein erstes Förderrollenpaar 10 bestehend aus Förderrollen 10a, 10b gebildet, welche gegenläufig rotierbar eingerichtet sind und welche eine im Wesentlichen parallel zur Förderrichtung F verlaufende Drehachse D aufweisen. Zur Bildung des ersten Förderabschnittes 7 sind die Förderrollen 10a, 10b darüber hinaus zueinander beabstandet. Hierbei ist der Abstand so gewählt, dass die Vorformlinge mit ihrem Neckring 11 zwischen den beiden Förderrollen 10A, 10B des ersten Förderrollenpaars 10 hängen bleiben.

An den ersten Förderabschnitt 7 schließt über den Lagerabschnitt 9 der zweite Förderabschnitt 8 an, welcher ebenfalls aus einem Förderrollenpaar 12 bestehend aus den Förderrollen 12a, 12b gebildet ist. Die Förderrollen 10a, 10b des ersten Förderrollenpaars 10 sind koaxial zu den Förderrollen 12a, 12b des zweiten Förderrollenpaars 12 angeordnet, sodass die Drehachsen D übereinstimmen. Darüber hinaus sind die Förderrollen 12a, 12b des zweiten Förderrollenpaars 12 ebenfalls mit einem Abstand zueinander angeordnet und können somit die Vorformlinge 1 über den Neckring 11 transportieren.

Das erste Förderrollenpaar weist eine Antriebseinrichtung 13 bestehend aus Antriebseinheiten 13a, 13b auf, wobei die Antriebseinheit 13a die Förderrolle 10a und die Antriebseinheit 13b die Förderrolle 10b antreibt. Die erste Antriebseinrichtung 13 ist in Förderrichtung F vor den entsprechenden Förderrollen 10a, 10b angeordnet.

Auch das zweite Förderrollenpaar 12 verfügt über eine eigenständige zweite Antriebseinrichtung 14 mit entsprechenden Antriebseinheiten 14a, 14b, wobei die Antriebseinheit 14a die Förderrolle 12a und die Antriebseinheit 14b die Förderrollen 12b antreibt.

Im Gegensatz zu dem ersten Förderrollenpaar 10 sind die Antriebseinheiten 14a, 14b bzw. die zweite Antriebseinrichtung 14 neben den Förderrollen 12a, 12b angeordnet.

Durch das Vorsehen von zwei separaten Förderabschnitten 7, 8 ist es möglich, zwei in Förderrichtung F unabhängige Förderrollenpaare 10, 12 vorzusehen, sodass in entsprechenden Bereichen der Fördergasse 6 auch unterschiedliche Drehgeschwindigkeiten realisiert werden können.

Die Antriebseinrichtungen 13, 14 können an eine nicht dargestellte Steuereinheit angeschlossen werden, über die die Antriebseinrichtungen 13, 14 unabhängig voneinander gesteuert oder geregelt werden können.

Lediglich im Bereich des Lageabschnittes 9, in dem die Förderrollenpaare 10, 12 drehbar gelagert sind. ist infolge der Drehung der Förderrollenpaare 10, 12 kein eigenständiger Antrieb möglich. Entsprechend ist eine Luftdüse 15 vorgesehen, welche die Vorformlinge 1 in diesem Bereich antreibt.

### Bezugszeichenliste

- 1: Vorform linge
- 2: Sammelbehälter
- 3: Steigförder
- 4: Transportvorrichtung
- 5: Rollensortierer
- 6: Fördergasse
- 7: erster Förderabschnitt
- 8: zweiter Förderabschnitt
- 9: Lagerabschnitt
- 10: erstes Förderrollenpaar
- 10a, 10b, 12a, 12b: Förderrollen
- 11: Neckring
- 12: zweites Förderrollenpaar
- 13: erste Antriebseinrichtung
- 13a, 16b, 14a, 14b: Antriebseinheiten
- 14: zweite Antriebseinrichtung
- 15: Luftdüse
- 16: Zuführrutsche
- F: Förderrichtung
- D: Drehachse
- V: Vertikalrichtung

## Patentansprüche

1. Vereinzelungsvorrichtung zum Vereinzeln von Vorformlingen (1) mit einer entlang einer Förderrichtung (F) angeordneten Fördergasse (6), wobei zumindest ein erster Förderabschnitt (7) der Fördergasse (6) durch ein erstes Förderrollenpaar (10) mit gegenläufig rotierbar eingerichteten Förderrollen (10a, 10b) gebildet ist, deren im Wesentlichen parallel zur Förderrichtung (F) verlaufenden Drehachsen (D) zueinander beabstandet sind,
**dadurch gekennzeichnet, dass**
die Fördergasse (6) in einem in Förderrichtung (F) hinter dem ersten Förderabschnitt (7) angeordneten zweiten Förderabschnitt (8) durch ein zweites Förderrollenpaar (12) gebildet ist und wobei dem ersten und dem zweiten Förderrollenpaar (10, 12) jeweils eine Antriebseinrichtung (13, 14) zugeordnet ist.

2. Vereinzelungsvorrichtung nach Anspruch 1, **dadurch gekennzeichnet, dass** die Förderrollen (10a, 10b) des ersten Förderrollenpaars (10) koaxial zu den Förderrollen (12a, 12b) des zweiten Förderrollenpaars (12) angeordnet sind.

3. Vereinzelungsvorrichtung nach Anspruch 1 oder 2, **dadurch gekennzeichnet, dass** der erste Förderabschnitt (7) an einen Behältereinwurf angrenzt.

4. Vereinzelungsvorrichtung nach Anspruch 3, **dadurch gekennzeichnet, dass** sich der erste Förderabschnitt (7) über einen Bereich zwischen 40 und 70% der Gesamtlänge der Fördergasse (6) erstreckt.

5. Vereinzelungsvorrichtung nach Anspruch 3 oder 4, **dadurch gekennzeichnet, dass** oberhalb der Fördergasse (6) ein Einwurftrichter angeordnet ist, welcher sich zumindest teilweise entlang des ersten Förderabschnittes (7) erstreckt.

6. Vereinzelungsvorrichtung nach einem der vorangegangenen Ansprüche, **dadurch gekennzeichnet, dass** die Antriebseinrichtung (13) des ersten Förderrollenpaars (10) in Förderrichtung (F) vor der Fördergasse (6) angeordnet ist.

7. Vereinzelungsvorrichtung nach einem der vorangegangenen Ansprüche, **dadurch gekennzeichnet, dass** die Antriebseinrichtung (14) des zweiten Förderrollenpaars (12) in Förderrichtung (F) neben der Fördergasse (6) angeordnet ist.

8. Vereinzelungsvorrichtung nach einem der vorangegangenen Ansprüche, **dadurch gekennzeichnet, dass** eine Steuereinheit dazu eingerichtet ist, die Antriebseinrichtungen (13, 14) des ersten und zweiten Förderrollenpaars (10, 12) unabhängig voneinander zu steuern oder zu regeln.

9. Vereinzelungsvorrichtung nach einem der vorangegangenen Ansprüche, **dadurch gekennzeichnet, dass** ein Lagerabschnitt (9) zwischen dem ersten und dem zweiten Förderabschnitt (7, 8) angeordnet ist.

10. Vereinzelungsvorrichtung nach Anspruch 9, **dadurch gekennzeichnet, dass** unterhalb des Lagerabschnittes (9) zumindest eine Fluiddüse zum Antrieb der Vorformlinge angeordnet ist.

11. Vereinzelungsvorrichtung nach einem der vorangegangenen Ansprüche, dass ein Belegungssensor in einem Auslaufbereich der Fördergasse (6) angeordnet ist.

12. Verfahren zum Vereinzeln von Vorformlingen (1) in einer Vereinzelungsvorrichtung nach einem der Ansprüche 1 bis 11, wobei die Vorformlinge (1) in der Fördergasse (6) entlang der Förderrichtung (F) durch gegenläufige Rotation der Förderrollen (10a, 10b, 12a, 12b) transportiert werden, wobei in zumindest einem Betriebspunkt die Förderrollen (10a, 10b) des ersten Förderrollenpaares (10) und die Förderrollen (12a, 12b) des zweiten Förderrollenpaares (12) unterschiedliche Drehgeschwindigkeiten aufweisen.

13. Verfahren nach Anspruch 12, wobei sich die Drehgeschwindigkeit des zweiten Förderrollenpaares (12) von der Drehgeschwindigkeit des ersten Förderrollenpaares (10) zwischen 5 und 25 % unterscheidet.

14. Verfahren nach Anspruch 12 oder 13, wobei eine Belegungskennwert in dem Auslaufbereich der Fördergasse (6) erfasst und bei Überschreiten eines Soll-Wertes die Drehgeschwindigkeit der Förderrollen (10a, 10b, 12a, 12b) in dem an den Auslaufbereich angrenzenden Förderabschnitt (7, 8) zumindest vorrübergehend reduziert wird.

15. Verfahren nach einem der Ansprüche 12 bis 14, wobei die Förderrollen (10a, 10b, 12a, 12b) des ersten und des zweiten Förderrollenpaares (10, 12) in einem weiteren Betriebspunkt eine identische Drehgeschwindigkeit aufweisen.

16. Verfahren nach einem der Ansprüche 12 bis 15, wobei die Vorformlinge (1) in einem zwischen den Förderabschnitten (7, 8) angeordneten Lagerabschnitt (9) mit einem Fluidstrom beaufschlagt werden.
